# EUROPEAN PATENT APPLICATION

(11) **EP 1 330 070 A1**
(43) Date of publication of application: **23.07.2003**
(21) Application number: 02022988.6
(22) Date of filing: 15.10.2002
(51) Int. Cl.: H04L 12/24

(54) **Method and apparatus for healing of failures for chained boards with SDH interfaces**

(30) Priority: 15.01.2002 EP 02360031
(71) Applicant: Evolium S.A.S., 75008 Paris (FR)
(72) Inventor: Blorec, Gwendal, 75014 Paris (FR); Ly, Muy-Chu, 91120 Palaiseau (FR)
(74) Representative: Urlichs, Stefan, Dipl.-Phys.

(57) **Abstract**

The basic idea is provide several spare boards at least on thereof being associated to a different chain of boards. By connecting the spare boards of the different board chains, a pool of spare boards is obtained. Thus, the associations of the spare boards to respective chains are, at least virtually, resolved allowing to employ the spare boards for healing of failures for any of the boards in the different chains. In particular, the present inventions allows a healing of several failures independently of the location of a failure in the chains. The number of spare boards in the different chains determines the number of pool spare boards and, thus, the minimum number of failures which can be healed. In order to increase the number healable failures, the number of spare boards in the different chains can be increased. Further, it contemplated to operate and to re-configure at least one of the board(s) originally forming one of the different chains, spare board(s) already used for failure healing and chain(s) such that an increased number failures are compensated without the need for an increased number of spare boards.

## Description

### Field Of The Invention

The present invention relates to a method and apparatus for operating data traffic components in communications environments. In particular, the present invention relates to a method and apparatus for healing and compensating of failures and faults of data traffic components operated as chains in a communications environments.

### Background Of The Invention

The increasing extent of telecommunications, and in particular the increasing amount of data traffic and increasing number of participating systems and devices requires an enhanced performance of hardware for communicating data traffic. Particularly in the field of 2G and 3G, as traffic is expected to increase in a dramatic fashion, operators of telecommunications environments require efficient high performance equipment exhibiting a low susceptibility to failures and faults.

In order to fulfill this demand, available hardware interface have been usually replaced by newly developed and designed hardware interfaces of enhanced performance and capacity.

This approach is costly, time consuming and not flexible for accommodating the fast changing requirements of telecommunications environments. For example, in order to enhance the performance for data communications, e.g. in systems according to the Synchronous Digital Hierarchy (SDH), special devices for data communication and distribution such as a PCU including higher-capacity boards have been provided.

A solution is to operate a data communications device serving as a data traffic interface, such as a packet control unit or packet server, e.g. originally used according to PDH such that components thereof, e.g. boards, having a lower performance, e.g. data rate, are cooperatively operated to support a desired higher performance. In particular, higher load due to the higher performance to be achieved are distributed to components which are not capable to support the higher load on their own.

In detail, boards of such a data traffic interface device are operated as a chain of boards, wherein boards of the chain share data traffic processing load required for a desired higher data traffic performance. This allows, for example, to operate boards of a PDH packet server originally supporting E1 interfaces of 2 Mb/s as a board chain providing SDH interfaces, e.g. STM-1, with data traffic rates of 140 Mb/s and higher.

Nevertheless, such enhanced communications environments are even more prone to failures and faults of portions and parts thereof especially due to its increased complexity. Thus, reliability and stability of such enhanced communications environments can be even worse and failures and faults can have larger effects, e.g. for components of high data traffic rates, compared to prior solutions. A particular problem for boards operated as chains is a plurality of subsequent failures of different boards.

In particular, conventional measures for operation can not be applied. For example, a conventional approach to detect failures for single boards or single boards not being arranged as chain, is an active failure detection by the equipment manager. In addition, the boards are regularly monitored and considered as faulty when a presence request is not answered in a pre-defined time. Moreover, a plurality and in particular cascades of alarms from several boards in response to a single failure can overload both human and technical operators. Therefore, conventional fault detections, which can be also performed via timers, are too long for SDH and further bound additional technical and human resources to be reasonably for high data traffic rates.

### Object Of The Invention

The object of the present inventions is to provide solutions for increasing the reliability and stability of chained board arrangements used in communications environments. In particular, the present invention is directed to an enhanced healing of failures and faults of boards operated as chains.

### Solution According To The Invention

The basic idea of the present invention is to provide several spare boards; at least one thereof being associated to a different chain of boards. By connecting the spare boards of the different board chains, a pool of spare boards is obtained.

Thus, the association of the spare boards to respective chains are, at least virtually, resolved allowing to employ the spare boards for healing of failures for any of the boards in the different chains. In particular, the present invention allows a healing of several failures independently of the location of a failure in the chains.

The number of spare boards in the different chains determines the number of pool spare boards and thus, the minimum number of failures which can be healed. In order to increase the number of healable failures, the number of spare boards in the different chains can be increased.

### Brief Description Of The Invention

On the basis of the above underlying basic idea the present invention provides a method for healing failures of at least two chain units operated as chain for supporting, communicating, routing, computing and the like of data traffic in a telecommunications environment. Further, each chain includes at least one spare chain unit being generally not used in normal chain operation and possibly serving as back-up chain unit in case of failures. In this context, chain units and spare chain units can comprise e.g. data communications and processing boards such as SDH boards, communications links there between and the like.

The chain units in each chain are connected for data traffic communications and processing by, e.g., a bus or any other suitable connection. The spare boards in the chains are also coupled to the respective bus to be possibly used for data traffic communications and processing in the respective chain.

For healing of failures of the chains and the chain units according to the invention, the spare chain units of the different chains are further connected with each other to form a spare chain unit pool. Preferably such connections are established via the chain buses and further data communications lines (e.g. buses) linking the chain buses.

The chains and its units are monitored to detect a first failure in a chain, i.e. a failed chain, and to determine a first failed chain unit associated to the first failure. Healing of the first failure is obtained by at least one of reversing the direction of data traffic flow through the first failed chain; including a first spare chain unit in the first failed chain and operating the included first spare chain unit to replace the first failed chain unit; and removing the first failed chain unit from the first failed chain, including a first spare chain unit in the first failed chain and operating the included first spare chain unit to replace the removed first failed unit, wherein the included first spare chain unit is selected from the spare chain unit pool.

An advantage of the spare chain unit pool is that failure healing in a chain is not limited to the at least one spare
chain unit of thereof. Rather, all spare chain units in the spare chain unit pool are principally available for failure healing in any of the chains.

As a result, the failure "history" of a chain to be healed is not relevant for a failure to be currently healed. The spare chain unit pool provides healing capacity independently of the fact whether the currently failed chain comprises at least one spare chain unit available for healing of its failure or not. Further, the spare chain unit pool allows an optimized failure healing since a spare chain unit can be selected which is more or most sufficient for healing of a current failure independently of the existence and characteristics of spare chain unit(s) in the currently failed chain. For example, assuming chains being different at least with respect to the respective spare chain unit(s), a spare chain unit of one chain can be more efficient for failure healing of another chain compared to its own spare chain unit.

According to the invention it is possible to heal failures subsequent the first failure being healed as defined above by detecting a second failure for one of the chains and determining a second failed chain unit in the currently failed chain. Here, the currently failed chain can be the first failed chain exhibiting a subsequent failure, i.e. the second failure, or any other of the chains.

To restore the operability of the currently failed chain at least one of the steps of reversing the direction of data traffic flow through the currently failed chain; including a second spare chain unit in the currently failed chain and operating the included second spare chain unit to replace the second failed chain unit; and removing the second failed chain unit from the currently failed chain, including a second spare chain unit in the currently failed chain and operating the included second spare chain unit to replace the removed second failed unit, wherein the included second spare chain unit is selected from the spare chain unit pool.

As a result, even in the case the currently failed chain corresponds to the first failed chain being healed by means its or one of its spare chain units, i.e. no own spare chain unit being available for failure healing of own failures, can healed by employing a spare chain unit from the spare chain unit pool.

The steps performed for the healing of chain failures described with respect to a second failure can be performed for a third, fourth, fifth, ..., N-th failure for any of the chains. The number of spare chain units already used for healing of prior failures determines the number of spare chain units necessary for healing of subsequent failures.

For example, in the case none of the prior failures could be healed by reversing the data traffic flow direction, third, fourth, fifth, ..., N-th spare chain units are employed. On the other hand, in the case all prior failures could be healed by reversing the data traffic flow direction, a subsequent failure requires only one spare chain unit, if not healed by data traffic flow direction reversion.

Assuming that failure healing by means of a data traffic flow direction reversion is only sufficient in very special, exceptional situations, the number of failures which can be healed as detailed above is strongly influenced by the number of spare chain units in the spare chain unit pool. Thus, in terms of the invention, a N-redundancy is defined for a number of N spare chain units in the spare chain unit pool. That means, at least a number of N failures can be healed by utilizing the N spare chain units.

In order to increase the number of healable failures, e.g. higher than the number of provided spare chain units, an enhanced healing of failures can be performed. In the case a subsequent failure is detected, a chain unit of the currently failed chain or a spare chain unit already employed for healing a previous failure can used to heal the subsequent failure. For the latter case, the already failure healing spare chain unit can be already used for the currently failed chain or any other chain.

Here, in particular, upon a current failure, a respective failed chain unit is identified and a distance of a previously failed chain unit and the identified subsequently failed chain unit is determined in view of the arrangement of the chain units in the chains. The previously failed chain unit used for the distance measurement can be a failed chain unit which has failed directly before the identified subsequently failed chain of any other chain unit previously failed.

Preferably, an enhanced healing of subsequent failures is performed if the determined distance is below a predefined measure. Such an enhanced healing can comprise including a further spare chain unit in the failed chain and operating the included further spare chain unit to replace the currently failed chain unit; and removing the currently failed chain unit from the respective chain, including a further spare chain unit in the chain and operating the included further spare chain unit to replace the removed chain unit.

In particular, current failures can be determined on the basis of alarms from neighboring chain elements.

A detection of failures for the chain units can be based on correlations defined for failures in chains and alarms generated by chain units. In response to at least one alarm from at least one chain unit it is possible to determine a current failure of a chain on the basis of the defined correlations.

A faster failure detection can be accomplished by determining the current failure on the basis of the defined correlations by excluding alarms for which no correlations to failures are defined.

When the at least one alarm is not sufficient to determine the current failure it is contemplated to receive at least one further alarm from at least one chain unit. The receipt of the at least one further alarm can be in response to an error information communicated by one or more chain units, following a request communicated to chain units or other alarm communications. Then, the current failure is determined on the basis of the defined correlations for the at least one alarm and the at least one further alarm.

Moreover, it is possible to define at least one of the chain units as susceptible to generate at least one further alarm subsequent to the at least one alarm. The defined chain unit is monitored or checked if the at least one alarm is not sufficient to determine the current failure. In response to a receipt of at least one further alarm from the defined chain unit, the current failure is specified on the basis of the defined correlations for the at least one alarm and the at least one further alarm.

Moreover, the present invention provides devices and systems being adapted and programmed and/or having means to carry out the above steps.

Furthermore, the solution according to the present invention can be achieved by a computer program product having program code portions for carrying out the steps of one of the above described metals.

### Brief Description Of The Figures

In the following description of preferred embodiments of the present invention it is referred to the accompanying drawings wherein:
- Fig. 1: schematically illustrates a telecommunications environment used for the present invention,
- Fig. 2: schematically illustrates an embodiment according to the present invention,
- Fig. 3: schematically illustrates a sub-rack arrangement according to the present invention,
- Fig. 4: schematically illustrates a board used for the present invention,
- Fig. 5: schematically illustrates sub-rack including chained boards according to the present invention,

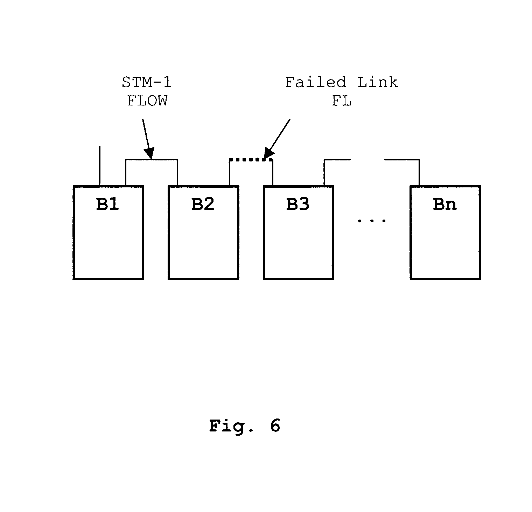

- Fig. 6: schematically illustrates a failure condition for the chained boards according to the present invention,
- Fig. 7: schematically illustrates a further sub-rack arrangement according to the present invention,
- Fig. 8: a second embodiment of a telecommunication device installed in a rack that is subdivided into two sub-racks,
- Fig. 9: the bus extension in the second embodiment,
- Fig. 10: the layout of the boards used in the second embodiment,
- Fig. 11: re-routing of traffic via the extended bus in the case of a failure.

### Description Of Preferred Embodiments

In the following, the invention will be exemplarily described with reference to telecommunications environments employing the standards for Synchronous Digital Hierarchy (SDH). Since SDH is well known in the art, detailed descriptions related to SDH are refrained from.

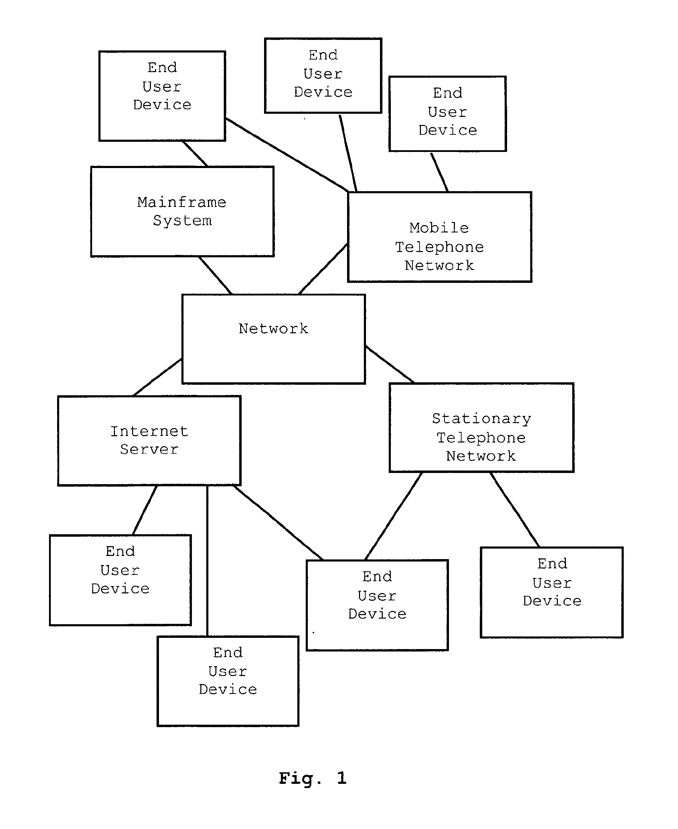

Referring to Fig. 1, a telecommunications environment comprises a network for data communications with other networks (e.g. mobile and stationary telephone networks), end user devices (e.g. telephones, computer systems), communications systems (e.g. Internet servers), and the like. For data communications, different parts of the telecommunications environment are linked via hardware interfaces. In the case of SDH such interfaces are formed by a device providing SDH interfaces.

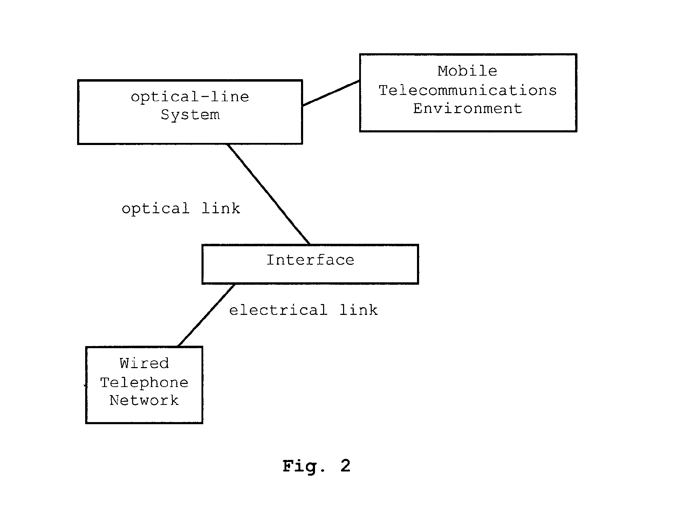

Fig. 2 shows, as an example, such an interfacing device for linking a mobile telephone environment and a terminal associated to a wired telephone environment. The mobile telephone environment is connected to the interfacing device by an optical-line system providing input and output functions for data communications to and from mobile telephone environment. In detail, the optical-line system comprises an optical port which is connected to an optical port of the board. An electric port of the board is connected to a terminal of the wired telephone environment for data communications.

### General description of the arrangement and operation of a board rack

In the following a general presentation of an equipment, referred to as rack below, and its operation is given. The employed principles are also used for the healing of failures
detailed in section "failure healing for chained sub-rack boards in a rack".

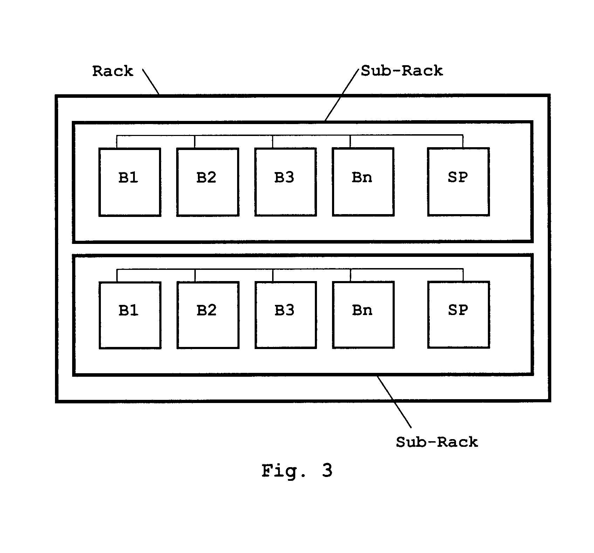

The equipment or rack includes at least two sub-racks each thereof comprising at least two boards and at least one spare board connected via a bus. Fig. 3 shows an arrangement with a single spare board per sub-rack.

The following description referring to a single sub-rack and respective boards also apply for all sub-racks included in the equipment.

### Boards

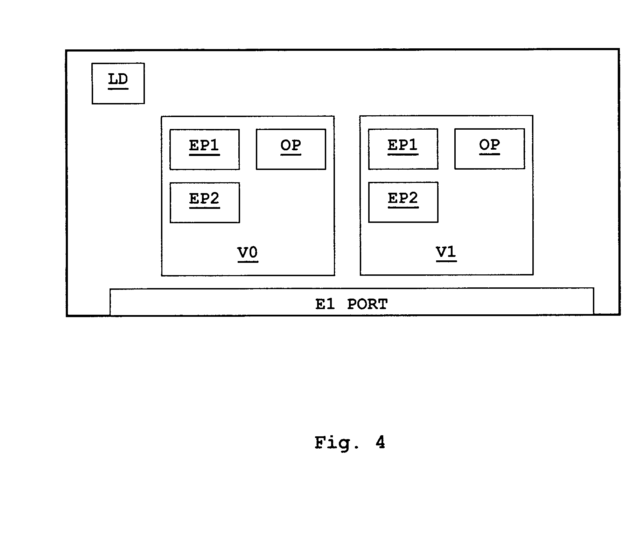

A set of boards is installed in sub-rack of a rack. The boards are located on slots of the sub-rack which are 1-to-1 coded by numbers. As illustrated in Fig. 4, each board comprises a laser diode LD used to communicate on an optical (STM-1) link to the outside network (or any other similar equipment targeted at this link).

Each board also comprises two framers (e.g. VC-4 framers), indicated by V0 and V1, each of them having two electrical ports EP1 and EP2 and an optical port OP, and a digital cross point switch DXS which connects both framers V0 and V1 to its electrical ports EP1, EP2 and OP. By means of the DXSs, the boards are connected to the slots of the sub-rack, which are in turn connected via a bus or another suitable connection.

### Sub-rack

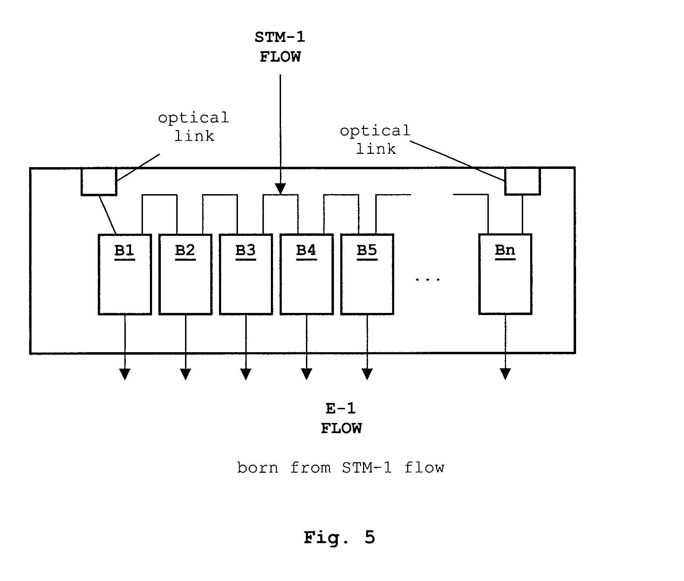

As shown in Fig. 5, the board chain in the sub-rack includes a number of installed boards B1,..., Bn required to provide a desired data traffic processing, e.g. by means of a high-capacity links such as an electrical STM-1 links. It has to be noted that no order of the boards in the chain and no rule in linking the boards are pre-supposed. Further, the sub-rack includes at least on spare board which is utilized for failures and faults in the sub-rack chain as descried below. The number of spare sub-rack boards determines the chain redundancy with respect to sub-rack failure healing by employing a spare board. It has to be noted that, as set forth above, the number of healable sub-rack failures can be larger than the number spare sub-rack boards.

At least one extremity of the sub-rack chain, i.e. at least one board arranged at one end of the sub-rack chain, is connected to an outside network e.g. via its optical port OP for high data rate traffic.

### Initialization of chained boards

Chain initialization and configuration can be performed under control of a control unit (not shown) providing hardware and software functions. The actual order of the boards in the sub-rack chain, is identified to determine linking or branching errors in the sub-rack chain (e.g. a loop in the sub-rack chain, missing or excess boards ), to initialize the sub-rack chain and to configure each board such that data traffic may flow through the sub-rack chain.

One aspect of this process is that each board will communicate to the board(s) preceding or following in the chain, data being indicative of the slot it is associated to and will receive, from the board(s) preceding or following in the chain, data being indicative of the slot(s) of the neighboring board(s).

The above one or two sub-rack chain extremities can be linked to the outside network by the operator and/or the manufacturer of the rack.

Further, the control unit is provided information of sub-rack slots (slot list) representing boards expected to belong to the sub-rack chain and information indicative of one or two API(s) (Application Programmers Interfaces) representing the extremities of the sub-rack chain. This can accomplished e.g. directly by aperator/manufacturer, by a software manager for the telecommunications environment, by data communications from the rack and the like.

The control unit configures the DXSs of each board in the list such that each framer V0 is connected to the respective optical port OP and each framer V1 to is connected to the respective electrical port EP2.

For detecting the one or two connected extremities of the sub-rack chain, the laser diodes LDs of each board in the list are activated. On the basis of the received information concerning the one or two APIs, each board in the sub-rack list is checked whether a data signal from a laser diode LD is communicated (e.g. the J0 bytes received for the STM-1 case). This allows to detect the extremities of the sub-rack chain.

Here it is possible to perform a first check via the received number of APIs. For example, linking or branching error might be existing in case one API is detected although the received API related information indicates two APIs, two instead of three, etc.

For the above described determination of the one or two extremities of the sub-rack chain all laser diodes LD of the boards are activated at least for a short period. Depending on the power of the laser diodes LDs, technical properties of the optical link to the outside network, security requirements and the like, the activation of all laser diodes may thus be considered as inadequate. As an alternative, it is contemplated to only activate the one or two laser diodes LDs necessary to determine, by the control unit via the respective API, which of the boards is actually connected to the outside network. This limited laser diode activation can e.g. performed by the operator manually or under control of hardware and/or software components of the operator. Further, this can be accomplished by a configuration of the equipment and/or the boards, e.g. by the manufacturer or the operator, in a manner such that laser diodes LDs connected to the outside are activated for example in response to putting the rack in operation or to control data from the control unit.

In case the limited activation of laser diodes LDs would not be sufficient to determine the extremities of the sub-rack chain, the extremities of the chain can be determined by an activation of laser diodes LDs of all sub-rack boards, as explained before.

Having determined the one or two extremities of the sub-rack chain connected to the outside network, the laser diodes LDs of each board in the sub-rack list is de-activated which is no chain extremity, i.e. not connected to the outside network.

Following the DXSs on each board in the sub-rack list representing no extremity of the chains are configured such that each framer V0 is connected to the respective electrical port EP1 and each framer V1 is connected to the respective electrical port EP2.

The control unit, receives or polls, respectively, from each board in the sub-rack list, data indicative of each sub-rack slot number to which board is associated to (e.g. the F1 byte in the STM-1 overhead received by each VC-4 Framer for the STM-1 case).

On the basis of the above configuration of the DXSs and the information indicating the association of the boards to the slots of the sub-rack, the control unit obtains its "abstract view" of the actual sub-rack chain. For example, this building of the abstract view of the actual sub-rack chain can performed through a comparison algorithm of board-slot-couples in a list.

Optional a re-rebuilding of the abstract view of the actual sub-rack chain can be performed in case at least one of the extremities of the sub-rack chain as determined above is still not connected to another board in the chain. Then, the DXS on the slot for the board representing the extremity in question is configured such that its framer V0 is connected to the respective optical port OP and its framer V1 to is connected to the respective electrical port E1.

Again on the basis of the above configuration of the DXSs and the information indicating the association of the boards to the slots of the sub-rack, the control unit builds its "abstract view" of the actual sub-rack chain.

After having determined the actual sub-rack chain, i.e. the board(s) serving as extremity(ies) of the sub-rack chain for data communications with the external network, the order of the boards in the chain and the association of the boards to slots of the sub-rack, the control unit configures components of the boards present in the actual sub-rack chain.

With respect to a synchronization of the boards and its components, the synchronization source for a board in the sub-rack chain is on the side which is, along the sub-rack chain, closest to the beginning of chain, i.e. the API for the sub-rack chain extremity or the respective board connected to the outside network for input communications there from.

### Fault detection for boards in a sub-rack chain

For a detection of faults or failures of boards arranged as a sub-rack chain, information is provided which characterizes slots of the sub-rack and the linking scheme used for the boards or the order of the boards in the sub-rack chain, respectively. Further, information is provided being indicative which board forms the beginning of the sub-rack chain. In case two boards are connected to the outside network, further information is provided which board(s) form(s) the end(s) of the sub-rack chain.

Such chain information for the control unit in order to perform a fault detection for chained boards can be obtained by the above described chain initialization. As an alternative, such information can be provided from the sub-rack itself or its operator. Advantageously, the control unit stores sub-rack chain information or has access to storage devices supplying sufficient sub-rack chain information.

Alarms are raised by the boards upon a fault and forwarded to the control unit. On the basis of alarm levels e.g. as defined for SDH, information indicating from which board and/or from which component thereof an alarm originates and chain information, the control unit is enabled to correlate faults from the alarms.

The basic idea is to define types of faults of the sub-rack chain, for each fault the number and optionally the sequence of alarms to be expected and for each fault which board or boards will raise alarm(s), e.g. expected subsequent alarms including any kind of side alarms, lower level alarms and the like that are raised as a result of a single alarm previously raised, e.g. when the single alarm exceeds a predefined level. The correlation takes in account the components of the board(s) reporting alarm(s) and alarm levels e.g. as defined for SDH.

In principle, fault conditions can be grouped in two categories, one wherein a single alarm, i.e. an alarm raised due a single event, is sufficient to actually detect and identify the underlying fault, the other wherein a single alarm is not sufficient.

For a single alarm being sufficient to perform a fault detection, the control unit correlates the current alarm to a respective fault, wherein it is contemplated to stop further monitoring of alarms.

In case a single alarm is not sufficient, the control unit waits until at least one further, subsequent alarm is raised, i.e. the occurrence of at least one further event or fault.

Further, the control unit may check for alarms expected to be raised subsequent to the first alarm.

Moreover, it is possible to employ specific, selected or all kinds of alarms resulting from a single alarm previously raised, e.g. when the single alarm exceeds a predefined level. On the basis of these alarms the control unit determines which alarms are of interest for a fault detection and monitors the respective events and boards or components thereof, respectively. For that purpose it is possible to filter alarms, e.g. by employing partial information obtained from primary or first alarms. As an example the first alarm provides information whether to check the board preceding or following the board from which the first alarm is originating.

Further, it is possible that alarms being expected to follow a first alarm are not reported or detected. Then, this situation itself can be considered as fault for which respective correlations can be defined with respect to the condition of the chain and its elements.

Fig. 5 illustrates an example of a fault detection for the case of a failed internal link. Due to a failure of an internal link between board B2 an board B3, i.e. failed link FL, framer V1 of board B2 and framer V0 of board B3 raise an alarm LOS. These alarms are correlated to the current fault, namely the failure of link FL. The thus detected fault or information being indicative thereof is provided, e.g. to the rack operator, for maintenance or repair purposes or replacement of defect components.

In general, a failure in a board or a component thereof, respectively, is not partial, i.e. a failed board or component will not let traffic there through and will act as a block in the sub-rack chain. For example, a failure in one of the framers V0 and V1 of a board will result in a complete failure of the board, and the failed board can be detected by means of alarms from the neighboring boards. Therefore, the above given correlation of alarms and faults and the resulting fault detection can be based on the assumption that a board raising an alarm is not the faulty or failed component.

For a case wherein the above assumptions can not be fully applied, e.g. if the failure of a component of a board does not lead to a complete failure of the board, the principle to detect faults on the basis of alarms raised by neighboring components can also be employed. Here, further alarms are considered and correlated in a similar manner to the above described correlation to faults. For example, a component of a board fails, neighboring components of the board will raise alarm which will be utilized to detect the underlying fault and to identify the failed component.

### Failure heating for boards of a sub-rack chain

For a healing of failures of boards arranged as a chain and board components, information is provided which characterizes slots of the sub-rack and the linking scheme used for the boards or the order of the boards in the sub-rack chain, respectively. Further, information is provided being indicative which board forms the beginning of the sub-rack chain. In case two boards are connected to the outside network, further information is provided which boards forms the end of the sub-rack chain.

Such chain information can be obtained by the above described chain initialization. As an alternative such information can be provided form the equipment or its operator. Advantageously, the control unit stores chain information or has access to storage device supplying sufficient chain information.

Further, information is provided indicating that a fault is existing, the type of fault and which of the boards is affected. This fault information can be obtain by the above described fault detection or by information provided from the equipment operator or any other suitable source such as a central unit (e.g. server, central computer system) for the telecommunications environment.

Upon a occurrence of a fault and on the basis of information indicating which kind of fault is present and which of the boards failed or is affected by the failure, an automatic "healing" is performed.

In dependence of the actual chain condition, measures for failure healing and re-establishing the operability of the sub-rack chain include at least:
- Changing the direction of data flow through the sub-rack chain,
- including a spare board in the chain, e.g. to replace a failed link between boards in the sub-rack chain or to provide failed functionalities, and
- excluding a failed board by including a spare board.

The healing of faults can include a process wherein the direction of data traffic through the sub-rack chain is reversed. In view of the utilized SDH, an APS (Automatic Protection Switching according to the SDH standard allowing to switch traffic from one (optical) active link to a passive link) is performed with respect to the board which previously formed the end of the original sub-rack chain. If necessary for such a change of the data traffic direction, the synchronization configuration of each board in the sub-rack chain also can be reversed, for example if a board takes its synchronization from the one preceding board it in the reversed sub-rack chain. A reversing of synchronization also can be accomplished by utilizing respective measures as described for the above chain initialization.

Depending on the redundancy intended for the equipment, i.e. the number of faults or failed boards possible before the complete equipment fails, one, two, three or more spare boards are provided. In order to replace a failed board, the spare board is connected, in the context of this description electrically connected, to the remaining functioning boards such that the sub-rack chain is formed in its intended original form. Such a connection can be e.g. obtained by coupling an electrical port of the each framer of the chained board to a bus incorporated in the sub-rack equipment, usually implemented in the back-panel of the sub-rack.

If a link between boards in the sub-rack chain failed, the spare board or one of the spare boards is activated to replace the failed data traffic line. In particular, the spare board will provide a transparent data traffic forwarding. In a comparable manner, the spare board or one of the spare boards can be integrated in the sub-rack chain to provide functionalities previously available but currently not supported due to a failure, wherein the respective board is not necessarily replaced.

In case a failure occurs in one of the boards, the fault is "healed" by replacing the board which failed or includes a failed component by a operable spare board arranged as a backup means in the sub-rack.

The spare board or one of the spare boards is connected with the remaining functioning boards of the sub-rack chain (which in fact is not chain anymore) such that the original sub-rack chain is restored. For the case of a bus for connecting boards in the sub-rack, the replacing spare board is coupled to the bus and put in operation by a configuration of the DXS in the spare board. For example, the framers of the spare board each are previously connected to an electrical port for the bus which includes, for framers having two electrical port, a twin port. For coupling the spare boards with the remaining boards of the sub-rack chain, the DXS of the board(s) surrounding the failed element has to be reconfigured so that the framer that previously was indirectly connected to the failed element is now indirectly connected to the spare board via the bus.

To configure the (spare) board now replacing the failed board, the configuration of the failed board is copied to the replacing board except for the DXS configuration of the failed board. The DXS configuration for the replacing board has to be adapted in dependence to the actual connection to the other boards and the bus. As an alternative, the configuration of the replacing board can be accomplished as described above with respect to a chain initialization for boards.

### Enhanced failure healing for boards of a sub-rack chain

The above failure healing is somewhat restricted to a healing of a number of failures corresponding to the number of spare board in a sub-rack. A higher number of failures can be compensated by a higher redundancy, i.e. a higher number of spare boards in a sub-rack. Nevertheless, it is desired to heal an increased number of failures while keeping the number of spare boards small. This can be accomplished by an enhanced failure healing for chained boards as set forth below.

The principle is to control whether a former spare board already included in the sub-rack chain and possibly replacing a failed board of the original sub-rack chain is sufficient to heal a further failure subsequently occurring. Since the former spare board is now a component of the actual chain and, thus, integrated at a specific part of the chain, for the case of boards used here, the former spare board is in general limited to heal failures of neighboring sub-rack chain sections, e.g. neighboring links or boards. In particular, this limitation is due to the number of connections and links possible to and from the assumed boards. For example, a board provided as a spare board and now being included in the sub-rack chain provides a wider capability of establishing links and connections to at least one of the bus and other boards in the sub-rack chain, enhanced failure healing is possible to failures of any chain parts and sections.

Assuming a first failure has been healed by including a board provided as spare board, thereby replacing e.g. a failed link or board, and a second failure follows, it is checked whether the second failure is existing for a chain component or section neighboring the former spare board now forming a part of the sub-rack chain.

The failure is evaluated with respect to the available performance of the included board, i.e. its capability and functionality not being required to heal the first failure or which can be utilized without effecting the first failure healing. That means it has to be proven that the included board is sufficient to heal both the first failure and the second failure.

In case of a positive result, the included board is activated to compensate the second failure, e.g. by a configuration, as explained above, on the basis of a failed board associated to the second failure or by establishing a failed link between boards or connection to the bus.

Otherwise the sub-rack chain can be healed by, if existing, including a further spare sub-rack board or by means of a failure healing of sub-rack boards of sub-rack included in a rack as described below.

The sequence of determining whether a further failure is a neighboring failure and whether the further failure can be healed by the included board can be reversed. In the case an included spare sub-rack board can not compensate a further failure or no further spare sub-rack boards not being already used for a failure healing is available, the determination of the failure location can be omitted and the failure healing will be performed as described in the following.

As an example for a single spare sub-rack board, the first failure was a failed link between two boards, the spare board was included in the sub-rack chain to serve as a link, i.e. to provide a transparent data traffic forwarding. If, as second failure, a board adjacent to the failed link fails, the former spare board can compensate the second failure by further activating the same with a data traffic processing functionality previously provided by the board now being failed.

As a further example, the data traffic of two or more neighboring failed boards can be controlled and processed by the former spare board if its performance is sufficient.

For carrying out the enhanced failure healing, the control unit is provided information characterizing the current sub-rack chain, i.e. its topology (e.g. which boards form the chain, the order of boards in the sub-rack chain, board functionalities) and information characterizing the current state of the sub-rack chain (e.g. operation condition of the boards, internal links and external links), e.g. as set forth above. It is noted that a dynamic configuration of the sub-rack chain (e.g. its current condition after initialization, configuration, start, possible failures and required healing) is used for this process. The static chain configuration is employed is no failure has been healed yet, e.g. for the above failure detection of healing.

Further failure(s) being currently compensated by a board which has been provided as a spare board and is now included in the sub-rack chain are monitored. In dependence of the failure(s) already healed by the former spare, now included board and the failure last detected it is determined whether the last failure can be healed by the board in question and how it is to be utilized for failure healing.

If a failure occurs it is checked whether the spare board is already busy or not. In the latter case failure related alarms can be forwarded by the spare board or originating there from and will be considered in the fault detection process.

In case the spare board is not included in the sub-rack chain for failure healing, the failure healing can be performed as described above.

Otherwise, the it is assessed whether the failed chain elements, i.e. previously failed chain element(s) now replaced by the spare board and currently failed chain element(s) last detected, are neighboring elements. In this context, neighboring chain elements include failed boards which are neighbors in the normal chain processing (e.g. neighboring with respect to the data traffic flow through the chain), failed links associated to the same board, failed boards and failed links thereto and combinations thereof.

For neighboring failed chain elements, the spare board is configured to replace the failed elements and its functionalities, at least in an extent that the sub-rack chain can be further operated. If the last failure to be currently healed is the first failure of a board, the configuration of the failed board is copied to the spare board except for the DXS configuration, as explained before.

For a failure being a further failure of a board, depending on the failure already compensated and the failure to be currently healed, the spare board can be activated to replace all failed boards. If the spare board already included in the chain can not substitute all functions of the failed boards it is still possible to further operate the chain. Here, it is determined which part of the date traffic control and processing should be maintained, e.g. depending from the priorities of the system operator. Then, the spare board is accordingly configured to absorb the respective configuration of the last failed board. For such a configuration is it possible that configurations of the spare board obtained from a previously failed board which has been replaced by the spare board before the occurrence of the last failure are altered to fulfill the data traffic requirements. Advantageously, the spare board absorbs as much as possible of the configuration of the failed board(s).

For the case of a first failure of a link, the spare board is configured to route data traffic for the failed link, e.g. through its VC-4 framers, with a synchronization configuration in view of the data traffic direction through the bus. Here, the DXS configuration can be so as to use the bus.

As a result of the failure healing, data traffic flows through the sub-rack chain, wherein data traffic processing can be fully restored or reduced in dependence of the failures and the capability of the spare board.

### Failure healing for chained sub-rack boards in a rack

As set forth above the used equipment, referred to as rack, includes at least two sub-racks each thereof comprising at least two boards. Boards of each sub-rack are connected to form a sub-rack chain, e.g. via a bus or any other suitable means, wherein each sub-rack comprises at least one spare sub-rack board.

Beside the above detailed arrangement and operation (chain forming, initialization, failure healing and enhanced failure healing) with respect to the sub-racks, the operation, maintenance and failure stability of the rack can be optimized, in general terms, by extending the connection or bus of at least one spare board in a sub-rack to at least a further sub-rack. In particular, such a bus extension shall allow to employ all provided spare boards for failure healing in all sub-racks by extending the respective buses to connect all sub-racks with respect to the spare boards.

Such a connection of spare boards is not intended to form larger sub-rack entities for the rack or a rack having only one sub-rack in view of the functions, functionalities and operation defined for sub-racks being not connected. Rather, connecting the sub-racks maintains the functional integrity as originally defined for the sub-racks although one or more boards, in particular spare boards, originally not associated to a sub-rack may be associated to this sub-rack.

### Bus extension for sub-rack spare boards

For extending the bus of a spare board in a sub-rack to further sub-racks included in the rack, in the case of the above described boards, a further DXS is associated to a spare board. For example, the further DXS can be arranged on a back panel of respective sub-rack the spare board in question is associated to.

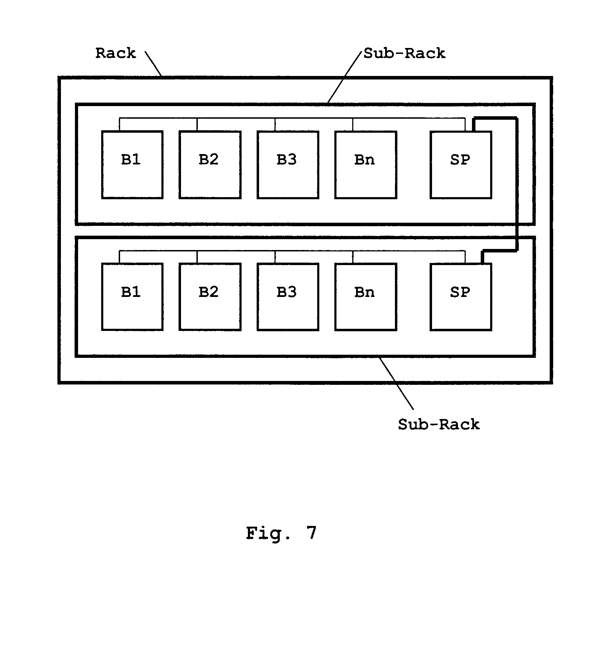

Fig. 7 illustrated such a spare boards bus extensions for two spare boards of two sub-racks. It is noted that this principle also applies for any kind of numbers of sub-rack spare boards and sub-racks.

### Fault detection

In general, fault detection for "connected" sub-racks is performed as described above with respect to a single sub-rack. Further, alarms raised from a spare board originally associated to a sub-rack and currently used for failure healing of another sub-rack are considered by the latter sub-rack.

### Failure healing

In the case, as set forth above, no sufficient failure healing can be performed in a failed sub-rack itself (e.g. by means of the spare board(s) thereof, change of traffic flow direction, enhanced failure healing, ...) or in the case the procedure described in the following will provide for a better failure healing, a spare board of another sub-rack which has its bus extend to the failed sub-rack (short "bus extended" spare board) is employed.

Failure healing by utilizing the "bus extended" spare board will be accomplished comparable to failure healing on the basis of a spare board originally associated to the failed sub-rack. In particular, this applies for the reconfiguration of spare board to be associated to the failed sub-rack, e.g. in the cases of a failed board and a failed link between boards in the failed sub-rack.

Further, the enhanced failure healing described above can also be employed with respect to the "bus extended" spare board, especially if a further failure occurs in the failed sub-rack for which the "bus extended" spare board is already used.

In the case more than one "bus extended" spare board are provided, the set of "bus extended" spare boards is monitored, e.g. by software based control measures or an equipment manager of operator. Upon a failure, it is determined whether a "bus extended" spare board is required and whether a "bus extended" spare board is available. Having selected an available "bus extended" spare board, e.g. a "bus extended" spare board being closest to a failure, the selected "bus extended" spare board is configured including possibly reconfigurations of neighboring boards etc. as described above.

As a result the previously failed sub-rack is restored such that the included "bus extended" spare board is busy and the data traffic flow and processing is performed as before the failure.

It has to be noted that the above described failure healing on the basis of "bus extended" spare boards can also be employed for sub-rack boards being not arranged in a chain, e.g. single sub-rack boards. Nevertheless, the foregoing examples of chained sub-rack boards have been chosen to present the complexity and flexibility of the solutions disclosed herein.

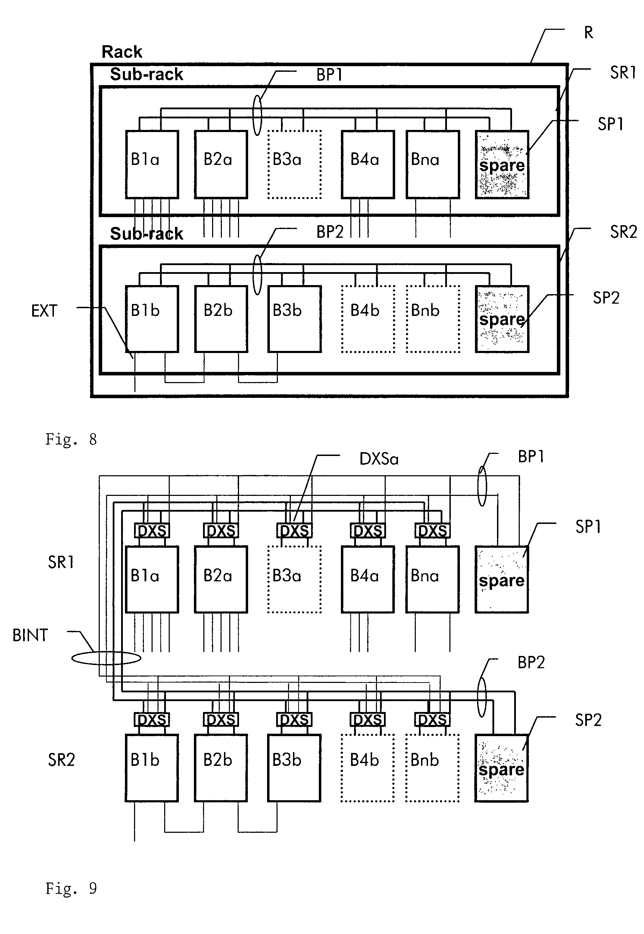

In the following, another embodiment of the present invention shown in figures 8 to 11 will be described.

Figure 8 shows a telecommunication device which is installed in a rack R. The rack R is subdivided into two sub-racks SR1, SR2. Each sub-rack SR1, SR2 has a number of bays or slots to accommodate a number of unit boards B1a-Bna, B1b-Bnb and at least one spare unit board SP1, SP2. A backplane BP1, BP2 allows to interconnect the various boards within each sub-rack SR1, SR2. On the front side of each board, external connections EXT can be plugged manually. In the example shown, boards B1a and B2a in sub-rack SR1 have external E1 connections while the boards B1b to Bnb in sub-rack SR2 are externally interconnected at the front side to form a unit chain as explained above. Some boards are shown in dotted lines to symbolize that it is not necessary to equip all availyble slots with boards. Conversely, some slots may stay empty for example when the device is not fully used to capacity.

According to the a principle of the present invention, each sub-rack additionally contains a spare board. The backplane forms a bus which allows to restore an internal failure of one of the boards using the spare board, i.e., a failed board is deactivated and the remaining boards now including the spare board are reconfigured to take over the operation of the failed board. Original external interconnections between the failed board and other boards are now replaced via the backplane bus. This is achieved through the use of cross-point switches on the boards.

However, if a first failure in for example sub-rack SR1 has been repaired using spare board SP1, no further spare board is available in the same rack to restore a second failure. On the other hand, spare board SP2 in sub-rack SR2 would be available. It is therefore a basic idea of the present invention, to extend the backplane bus BP1 to include both sub-racks. This is shown in figure 9.

Each bus connected to a spare board is extended by an internal bus interconnection EBUS to all sub-racks. Cross-point switches DXS on the backplane allow to select for each board the bus to which it will be connected. Bus BP1 now connects spare board SP1 with all protected boards in both racks and bus BP2 connects spare board SP2 with all protected boards in both racks. If for example board B3a fails, cross-point switch DXSa on the backplane of sub-rack SR1 could be switched to replace the failed board either by spare board SP1 via bus BP1 or by spare board SP2 via bus BP2. Thus, spare boards SP1 and SP2 form a pool of spare boards for all sub-racks.

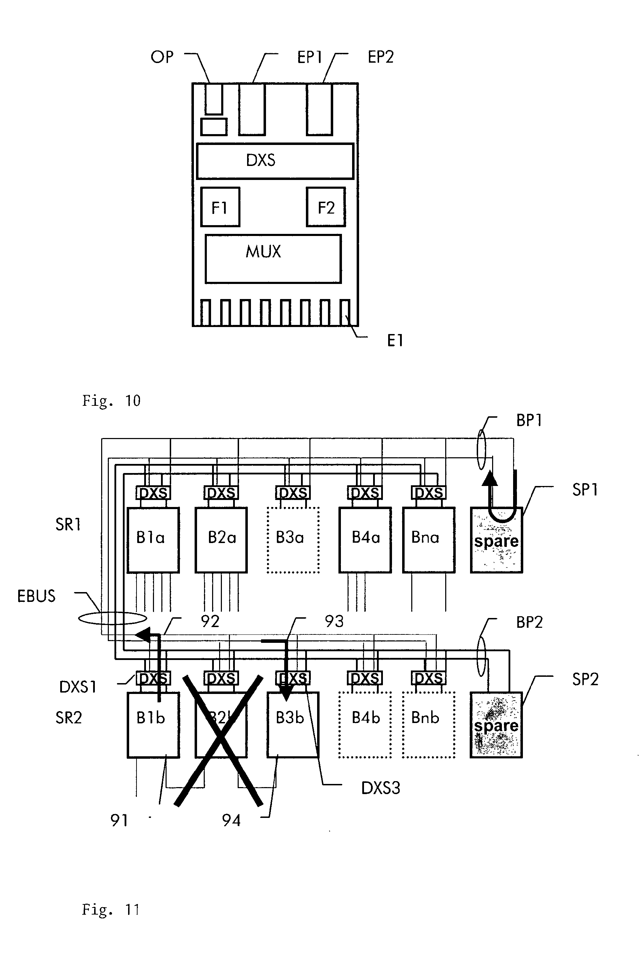

The layout of the boards is shown schematically in figure 10. Each board has a number of E1 ports on the front side, an optical STM-1 port OP, two electrical STM-1 ports EP1, EP2 on the back side, a multiplexer MUX, two VC-4 framers F1, F2 and an on-board cross-point switch DXS. The DXS allows to connect the two framers to any of the STM-1 ports. When the board is plugged into a bay of its sub-rack, electrical STM-1 ports EP1 and EP2 connect to the backplane bus of the sub-rack.

It is now assumed that board B2b in figure 9 has failed. The control unit (not shown), i.e., a software-driven equipment manager, reconfigures the neighboring boards B1b and B3b to replace the failed board by a spare board. It is further assumed, that spare board SP2 is already busy and thus not available for restoration. Thus, restoration has to employ spare board SP1 in sub-rack SR1. Hence, DXS1 and DXS3 are switched to bus BP1. Board B1b is re-configured to re-route traffic from output 91 to bus line 92 and board B3b is re-configured to receive traffic from bus line 93 rather than from external input 93. Spare board SP1 is now loaded with the same configuration parameter as failed board B2b before and thus takes over operation of the failed board. Figure 11 shows how traffic is re-routed to replace the failed board B2b.

It is preferred to use the spare board within the same sub-rack first is available and to use bus-extended restoration only if restoration within the same sub-rack is not possible. However, any other preference or choice of available spare boards from the pool would also be possible.

The invention is particularly suited for telecommunications devices such as radio node controllers or multi-BSS fast packet servers for 2,5G or 3G radio networks (GPRS, EDGE, or UMTS), where the node-internal data processing is distributed among a number of boards which are chained or interconnected by an internal SDH type bus system.

It would be apparent to those skilled in the art having understood the above principles and embodiments that the invention is not limited to the specific embodiments and that various modifications alternatives are available. For example, the bus extension can randomly connect via corresponding cross-point switches the spare boards of the two sub-racks rather than the protected boards. The invention is also not limited to the use of only two sub-racks, exactly five protected and only one spare boards. The invention is also not limited to SDH-type bus systems but can also be employed on other buses or other bus systems, such as Ethernet-based buses.

## Claims

1. A failure resistant telecommunication device arranged in a rack (R) being subdivided into at least two sub-racks (SR1, SR2);
said at least two sub-racks (SR1, SR2) each comprising two or more unit boards (B1,..., Bn) for data communications and at least one spare unit board (SP);
within each sub-rack (SR1, SR2), any of said unit boards (B1,..., Bn) and said spare unit board (SP) being connectable by means of a bus (BP1, BP2);
and at least the bus (BP1) of one of the sub-racks (SR1) being extended to the other sub-rack (SR2) to form a pool of spare unit boards (SP1, SP2);
said telecommunication device further comprising a control unit adapted and programmed
- to monitor at least one of the sub-racks (SR1, SR2) to detect a failure,
- to determine a failed unit board (B2b) associated to said failure, and
- to either operate the spare unit board (SP2) of the same sub-rack (SR2) or to operate via the extended bus (EBUS) the spare unit board (SP1) of the other sub-rack (SR1) to replace the failed unit board (B3b).

2. A failure resistant telecommunication device according to claim 1, wherein each sub-rack having its own dedicated backplane and wherein said bus is implemented in the backplane of the corresponding sub-rack.

3. A failure resistant telecommunication device according to claim 1, wherein said boards are connectable to said extended bus by means of digital cross point switches (DXS)

4. A failure resistant telecommunication device according to claim 1, wherein said unit boards being interconnected to form a unit chain.

5. A method for failure healing in a failure resistant telecommunications device, comprising the steps of:
- providing two or more sub-racks (SR1, SR2), each of which comprising two or more unit boards (B1,..., Bn) for data communications and at least one spare unit board (SP); any of said unit boards (B1,..., Bn) and said spare unit board (SP) being connectable by means of a bus (BP1, BP2) and at least the bus (BP1) of one of the sub-racks (SR1) being extended to the other sub-rack (SR2) to form a pool of spare unit boards (SP1, SP2);
- monitoring at least one of the sub-racks to detect a failure in said sub-rack,
- determining a failed unit board associated to said failure, and
- operating either the spare unit board (SP2) of the same sub-rack (SR2) to replace the failed unit board or operating via the extended bus (EBUS) the spare unit board (SP1) of the other sub-rack (SR1) to replace the failed unit board (B3b).

6. A method according to claim 5, comprising the step of detecting a failure of any of the unit boards on the basis of alarms from neighboring units boards.

7. A method according to claim 5, comprising the step of
- defining correlations of predefined failure types of the unit boards and alarms to be generated by the unit boards,
- receiving at least one alarm from at least one of the units boards (B1,...,Bn), and
- determining a current failure of any of the unit boards on the basis of the defined correlations for the at least one alarm.

8. A method according to claim 7, further comprising the step of determining the current failure on the basis of the defined correlations by excluding alarms for which no correlations to failures have been defined.

9. A method according to claim 7, further comprising the steps of:
- receiving at least one further alarm from at least one of the units boards (B1,...,Bn) if the at least one alarm is not sufficient to determine the current failure, and
- determining the current failure on the basis of the defined correlations for the at least one alarm and the at least one further alarm.

10. A method according to claim 7, further comprising the steps of:
- defining at least one of the units boards (B1,...,Bn) as susceptible to generate at least one further alarm subsequent to the at least one alarm,
- monitoring the at least one of the unit boards (B1,...,Bn) if the at least one alarm is not sufficient to determine the current failure,
- receiving at least one further alarm from the defined at least one of the units boards (B1,...,Bn), and
- determining the current failure on the basis of the defined correlations for the at least one alarm and the at least one further alarm.
